# EUROPEAN PATENT APPLICATION

(11) **EP 1 469 470 A2**
(43) Date of publication of application: **20.10.2004**
(21) Application number: 04009157.1
(22) Date of filing: 16.04.2004
(51) Int. Cl.: G11B 19/12, G11B 19/26

(54) **Method and apparatus for controlling maximum access speed in optical disc apparatus**

(30) Priority: 17.04.2003 KR 2003024358
(71) Applicant: LG ELECTRONICS INC., Seoul 150-010 (KR)
(72) Inventor: Lee, Sung, Yup, Daegu-si 701-032 (KR)
(74) Representative: VOSSIUS & PARTNER

(57) **Abstract**

A method is provided for controlling the maximum access speed of an optical disc in an optical disc apparatus. If the optical disc loaded in the optical disc apparatus is a CD-R having a possibility of creating many errors during the data reading/writing process, the maximum access speed can be changed according to disc maker information or user's request. As a result, the optical disc apparatus can stably record or reproduce data on/from a specific optical disc such as a CD-R, and does not decelerate unnecessarily the maximum access speed of a high-quality optical disc providing superior data reading/writing performance.

## Description

The present invention relates to a method and apparatus for controlling the maximum access speed in an optical disc apparatus, and more particularly to a method and apparatus for controlling the maximum access speed in an optical disc apparatus by varying the access speed applied to different optical discs such as CD-R (Compact-Disc Recordable) based on disc manufacturer information or a user's request.

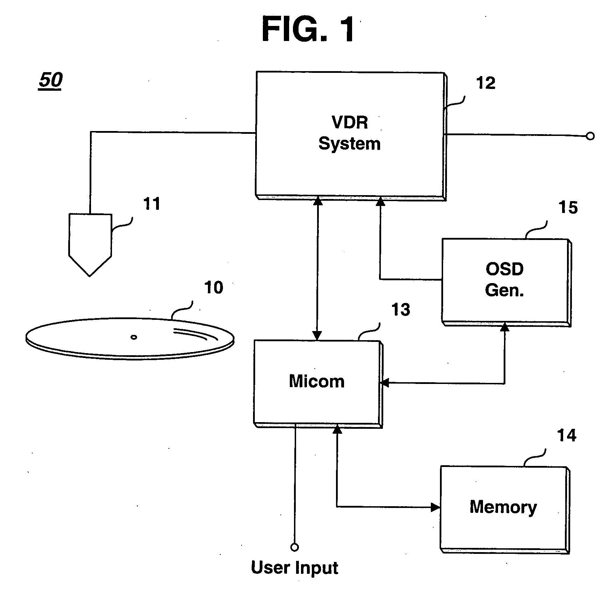

In recent times, there has been newly developed an optical disc apparatus 50 for recording or reproducing high-quality video data and high-quality audio data. Referring to Fig. 1, the optical disc apparatus 50 includes an optical pick-up unit 11, a VDR (Video Disc Recorder) system 12, a microcomputer 13, a memory 14, and an OSD (On Screen Display) generator 15, all operative coupled.

The microcomputer 13 controls the VDR system 12 in accordance with a user's request, such that data is recorded on or is read out from an optical disc 10.

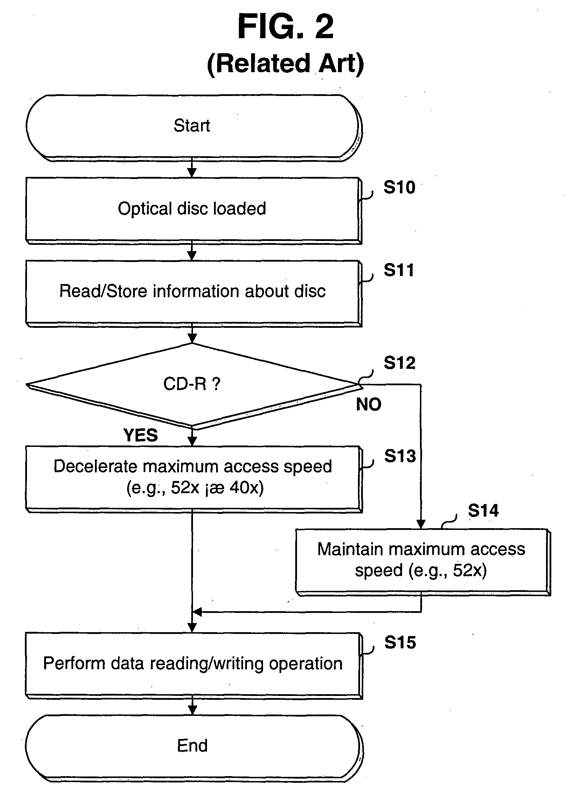

For example, as shown in Fig. 2, if the optical disc 10 is loaded in the optical disc apparatus 50 at step S10, the microcomputer 13 searches for a Lead-In zone of the optical disc 10 to read information about the disc, and performs an operation for storing the read information in the memory 14 at step S11.

The microcomputer 13 determines the type of the optical disc 10 by referring to the information about the disc stored in the memory 14 at step S12. If the microcomputer 13 determines that the optical disc 10 is a one-time recordable CD-R at step S12, the microcomputer 13 lowers the allowable maximum access speed of the optical disc apparatus by subtracting a predetermined data reading/writing speed from it, and applies the lowered access speed to the disc 10.

For example, if it is determined at step S12 that the optical disc is a CD-R having a possibility of creating many errors during a data reading/writing time, the microcomputer 13 at step S13 lowers the initial maximum access speed to a 40x and applies the 40x access speed to the CD-R even though the optical disc apparatus has the initial maximum access speed of 52x, so that desired data can be read from or recorded on the CD-R at the 40x access speed. But, if it is determined, at step S12, that the optical disc is not a one-time recordable CD-R, for example, if the optical disc is a CD-ROM, the microcomputer 13 applies the original allowable maximum access speed of 52x to the CD-ROM at step S14, and data recorded on the CD-ROM is reproduced at step S15.

Therefore, the aforementioned optical disc apparatus can stably record or reproduce data on/from a specific type of optical disc such as a CD-R, which has a higher possibility of creating unexpected errors during a data reading/writing time compared to other types of discs.

However, the conventional optical disc apparatus has a disadvantage in that it applies one lower maximum access speed to optical discs by referring to only the types of the optical discs. But even though the disc type may be the same, discs from different manufacturers vary greatly from each other in terms of their disc properties and capabilities. For example, a CD-R from a certain manufacturer such as LG Electronics, Inc. (LGE) has superior data reading/writing qualities than CD-Rs from other manufacturers. But the conventional optical disc apparatus applies one lower maximum access speed to all CD-Rs irrespective of disc makers or other information. As a result, the access speed applied to certain CD-Rs are unnecessarily low, thereby causing unnecessary delays in the data reading/writing operations.

Therefore, the present invention has been made to overcome the above and other problems of the related art.

It is an object of the present invention to provide a method and apparatus for controlling the maximum access speed (rotation speed) of an optical disc by referring to category information of the optical disc, and more particularly to provide a method and apparatus for controlling the maximum access speed of an optical disc in an optical disc apparatus by applying a different maximum access speed to different optical discs according to disc maker information or a user's request.

In accordance with one aspect of the present invention, there is provided a method for controlling a maximum access speed of an optical disc, comprising the steps of: (a) identifying a kind of a loaded optical disc; and (b) controlling a maximum access speed of the optical disc according to the identified kind of the optical disc.

In accordance with another aspect of the present invention, there is provided a method for controlling a maximum access speed of an optical disc, comprising the steps of: (a) determining a type of a loaded optical disc; and (b) controlling a maximum access speed of the optical disc according to a user input, if the step (a) determines that the optical disc is of a certain type.

In accordance with another aspect of the present invention, there is provided a method for controlling an access speed of a disc, the method comprising: (a) determining a type of a loaded disc; (b) determining a maker of the disc based on the result of the step (a); and (c) varying an access speed of the disc according to the determined maker of the disc.

In accordance with another aspect of the present invention, there is provided a method for controlling an access speed of a disc, the method comprising: (a) determining a type of a loaded disc; (b) determining if there is a user input for setting an access speed of the disc, based on the result of the step (a); and (c) varying the access speed of the disc according to the user input.

In accordance with another aspect of the present invention, there is provided an apparatus for controlling an access speed of a disc, the apparatus comprising a combination of elements for: determining a type of a loaded disc; determining a maker of the disc based on the result of the first determining; and varying an access speed of the disc according to the determined maker of the disc.

In accordance with another aspect of the present invention, there is provided an apparatus for controlling an access speed of a disc, the apparatus comprising a combination of elements for: determining a type of a loaded disc; determining if there is a user input for setting an access speed of the disc, based on the result of the first determining; and varying the access speed of the disc according to the user input.

These and other objects of the present application will become more readily apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

The above and other objects, features and other advantages of the present invention will be more clearly understood from the following detailed description taken in conjunction with the accompanying drawings, in which:
Fig. 1 is a block diagram of an optical disc apparatus to which the present invention is applicable;
Fig. 2 is a flow chart illustrating a conventional method for controlling the maximum access speed of an optical disc;
Fig. 3 is a table illustrating an example of maximum access speed control information for available disc makers in accordance with a preferred embodiment of the present invention;
Fig. 4 is a flow chart illustrating a method for controlling the maximum access speed of an optical disc in an optical disc apparatus in accordance with a preferred embodiment of the present invention; and
Fig. 5 is a flow chart illustrating a method for controlling the maximum access speed of an optical disc in an optical disc apparatus in accordance with another preferred embodiment of the present invention.

Now, preferred embodiments of the present invention will be described in detail with reference to the annexed drawings.

The maximum access speed controlling method according to the present invention can be applied to the optical disc apparatus 50 shown in Fig. 1 or other known optical disc apparatuses.

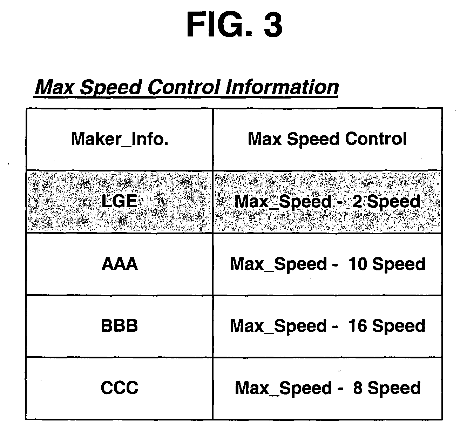

According to an embodiment of the present invention, the memory 14 of the optical disc apparatus stores and manages maximum access speed control information for different kinds of optical discs such as different optical disc makers and/or optical disc IDs, as shown in Fig. 3.

Referring to Fig. 3, for example, as part of the maximum access speed control information stored in the memory 14, for a specified maker such as LGE that manufactures high-quality optical discs providing superior data reading/writing performance, information indicating that a 2x access speed is subtracted from an initial allowable maximum access speed of the optical disc apparatus is stored in the memory 14. For another company manufacturing relatively low-quality optical discs providing inferior data reading/writing performance, information indicating that a 16x access speed is subtracted from the initial allowable maximum access speed of the optical disc apparatus is also stored as part of the maximum access speed control information in the memory 14. In this manner, the maximum access speed control information includes a list of possible disc makers for each possible disc type, and the access speed appropriate for each of the disc makers. Here, the appropriate access speed is represented in terms of subtracting a certain speed from the original maximum access speed of the optical disc apparatus, but can be represented in other ways such as identifying directly the appropriate access speed.

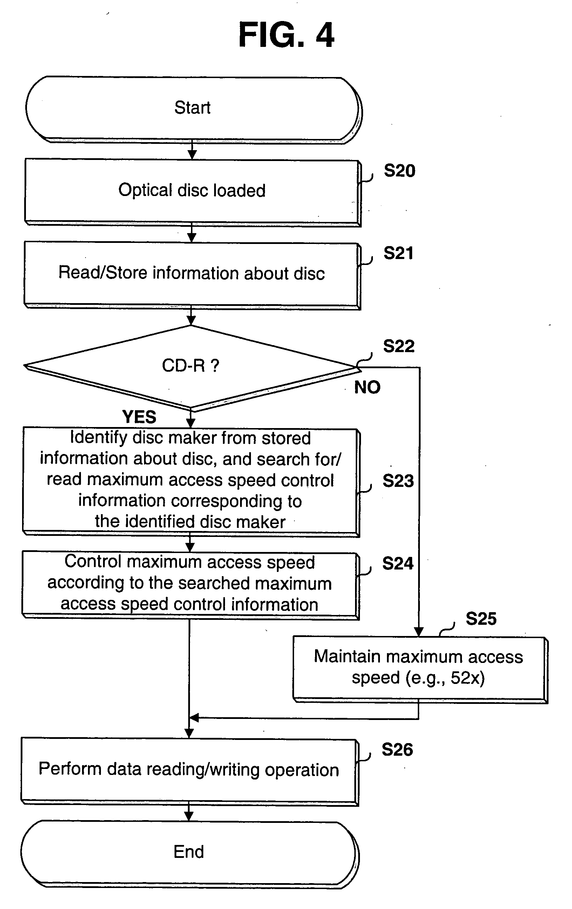

Fig. 4 is a flow chart illustrating a method for controlling the maximum access speed of an optical disc in an optical disc apparatus in accordance with a preferred embodiment of the present invention.

For example, as shown in Fig. 4, if the optical disc 10 is loaded in the optical disc apparatus 50 at step S20, the microcomputer 13 searches for a Lead-In zone of the optical disc 10 to read information about the disc, and stores the read information about the disc in the memory 14 or other suitable storage at step S21.

The microcomputer 13 determines the type of the optical disc 10 by referring to the information about the disc stored in the memory 14 at step S22. If it is determined that the optical disc 10 is, e.g., a one-time recordable CD-R at step S22, the microcomputer 13 identifies the disc maker from the stored information about the disc, and searches for and reads the maximum access speed control information (e.g., as shown in Fig. 3) corresponding to the identified disc maker from the memory 14 at step S23.

For example, if it is determined that the optical disc 10 is manufactured by a maker (e.g., LGE) manufacturing high-quality optical discs providing superior data reading/writing performance, the microcomputer 13 subtracts a 2x access speed (obtained from the maximum access speed control information based on the identified disc maker) from the original maximum access speed of 52x to come up with a 50x access speed at step S24, such that data reading/writing functions of this particularly optical disc can be performed at the modified 50x access speed at step S26. But, if it is determined at step S23 that the optical disc 10 is manufactured by another maker (e.g., BBB) manufacturing relatively low-quality optical discs providing poor data reading/writing performance, the microcomputer 13 subtracts a 16x access speed (obtained from the maximum access speed control information) from the original maximum access speed of 52x at step S24, such that data reading/writing functions of the current optical disc can be performed at the modified 36x access speed at step S26.

In the meantime, if it is determined that the optical disc 10 is not a one-time recordable CD-R at step S22, for example, if the optical disc 10 is a CD-ROM, the microcomputer 13 maintains the original allowable maximum access speed of 52x at step S25, such that data recorded on the CD-ROM is reproduced or data is written on the CD-ROM at the 52x access speed at step S26.

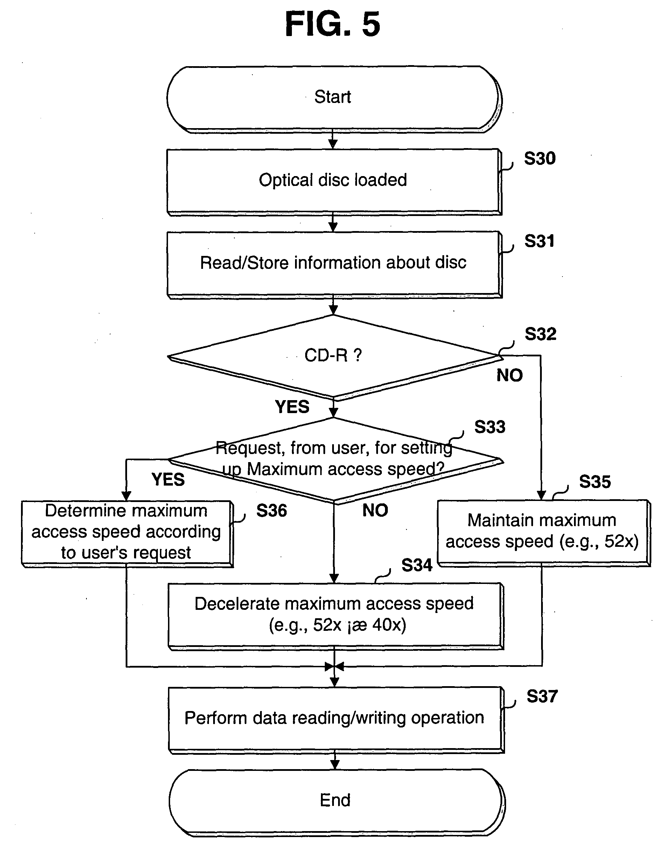

Fig. 5 is a flow chart illustrating a method for controlling the maximum access speed of an optical disc in an optical disc apparatus in accordance with another preferred embodiment of the present invention.

As shown in Fig. 5, if the optical disc 10 is loaded in the optical disc apparatus 50 at step S30, the microcomputer 13 searches for a Lead-In zone of the optical disc 10 to read information about the disc, and stores the read information in the memory 14 or other suitable storage at step S31.

The microcomputer 13 determines the type of the optical disc 10 by referring to the information about the disc stored in the memory 14 at step S32. If it is determined that the optical disc 10 is, e.g., a one-time recordable CD-R at step S32, the microcomputer 13 determines whether or not there is a user's request for setting up the maximum access speed associated with data reading/writing operations at step S33. However, if it is determined that the optical disc 10 is not a one-time recordable CD-R at step S32, for example, if the optical disc 10 is a CD-ROM, the microcomputer 13 maintains the original allowable maximum access speed of 52x at step S35, such that data recorded on the CD-ROM is reproduced or data is written on the CD-ROM at the 52x access speed at step S37.

If there is no user's request for setting the maximum access speed associated with data reading/writing operations at step S33, the microcomputer 13 subtracts a predetermined access speed from the original allowable maximum access speed of the optical disc apparatus at step S34. In more detail, if it is determined that the optical disc 10 is a CD-R which has the high possibility of creating unexpected errors during reading/writing data thereon at step S32, the microcomputer 13 applies a 40x access speed to the CD-R even though the optical disc apparatus has the original maximum access speed of 52x, such that data can be read from or recorded on the CD-R at the 40x access speed. Here, the disc maker information is not used.

In another variation, steps S23 and S24 of Fig. 4 can be applied in lieu of step S34, such that the maximum access speed varied according to the disc manufacturer information is applied to the current disc to perform the data reading/writing operation at step S37.

However, if there is a user's request for setting the maximum access speed at step S33, the microcomputer 13 applies the user-requested maximum access speed to the optical disc at step S36. This user-requested maximum access speed may be set to a predetermined access speed by means of the user entering number keys, by a simple button operation by the user, or by some other user input means.

The microcomputer 13 controls the access speed of the optical disc according to the determined maximum access speed, such that data reading/writing operations can be performed at the controlled access speed at step S37.

Therefore, the aforementioned optical disc apparatus can stably record or reproduce data on/from a specific optical disc such as a CD-R having the high possibility of creating unexpected errors during the reading/writing of data thereon, and can control the maximum access speed of the disc according to the disc maker information or a user's request.

As apparent from the above description, the method for controlling the maximum access speed of an optical disc in an optical disc apparatus according to the present invention can stably record or reproduce data on/from a specific optical disc such as a CD-R having the high possibility of creating unexpected errors during a data reading/writing time, and prevents unnecessary deceleration of the maximum access speed of a high-quality optical disc having superior data reading/writing functions.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

For example, the maximum access speed control information can be stored in the memory 14 or other storage, and/or can be downloaded from a network such as the Internet. The maximum access speed control information can include a list of different types of optical discs, a list of different disc makers for each of those types of optical discs, and the access speed for each of the discs from the makers. The present invention is not limited to CD-R and non-CD-R types of discs, but is applicable to many different types of discs and disc manufacturers.

## Claims

1. A method for controlling a maximum access speed of an optical disc, comprising the steps of:
(a) identifying a kind of a loaded optical disc; and
(b) controlling a maximum access speed of the optical disc according to the identified kind of the optical disc.

2. The method as set forth in claim 1, wherein in the step (a), the kind of the optical disc is identified by referring to either disc maker information or disc ID information.

3. The method as set forth in claim 1 or 2, wherein in the step (b), the maximum access speed is controlled by subtracting a predetermined access speed from an initial allowable maximum access speed of an optical disc apparatus by referring to maximum access speed control information for each disc maker stored in a memory of the optical disc apparatus.

4. The method as set forth in claim 1, 2 or 3, further comprising the step of:
(c) determining a type of the optical disc, prior to performing the step (a).

5. A method for controlling a maximum access speed of an optical disc, comprising the steps of:
(a) determining a type of a loaded optical disc; and
(b) controlling a maximum access speed of the optical disc according to a user input, if the step (a) determines that the optical disc is of a certain type.

6. The method as set forth in claim 5, wherein in the step (b), if there is no user input, the maximum access speed is decelerated to be equal to a predetermined access speed.

7. The method as set forth in claim 5 or 6, wherein in the step (b), the maximum access speed is controlled to be equal to an allowable maximum access speed of an optical disc apparatus by the user's operation of a specified button equipped in the optical disc apparatus.

8. The method as set forth in claim 5, 6 or 7, wherein in the step (b), if there is no user input, the maximum access speed is varied according to disc maker information.

9. A method for controlling an access speed of a disc, the method comprising:
(a) determining a type of a loaded disc;
(b) determining a maker of the disc based on the result of the step (a); and
(c) varying an access speed of the disc according to the determined maker of the disc.

10. The method as set forth in claim 9, wherein the step (b) is performed if the step (a) determines that the type of the disc is a CD-R.

11. The method as set forth in claim 9 or 10, further comprising:
(d) prestoring a list of possible disc makers for each disc type, and access speed control information associated with each of the list of disc makers.

12. A method for controlling an access speed of a disc, the method comprising:
(a) determining a type of a loaded disc;
(b) determining if there is a user input for setting an access speed of the disc, based on the result of the step (a); and
(c) varying the access speed of the disc according to the user input.

13. The method as set forth in claim 12, further comprising:
(d) varying the access speed of the disc to one fixed speed if the step (b) determines that there is no user input.

14. The method as set forth in claim 12 or 13, further comprising:
(e) varying the access speed of the disc according to disc maker information of the disc if the step (b) determines that there is no user input.

15. The method as set forth in claim 14, further comprising:
(f) prestoring a list of possible disc makers for each disc type, and access speed control information associated with each of the list of disc makers, whereby the step (e) is performed based on the prestored information.

16. An apparatus for controlling an access speed of a disc, the apparatus comprising:
first means for determining a type of a loaded disc;
second means for determining a maker of the disc based on the result of the determining by the first means; and
third means for varying an access speed of the disc according to the determined maker of the disc.

17. The apparatus as set forth in claim 16, further comprising:
fourth means for prestoring a list of possible disc makers for each disc type, and access speed control information associated with each of the list of disc makers.

18. An apparatus for controlling an access speed of a disc, the apparatus comprising:
first means for determining a type of a loaded disc;
second means for determining if there is a user input for setting an access speed of the disc, based on the result of the determining by the first means; and
third means for varying the access speed of the disc according to the user input.

19. The apparatus as set forth in claim 18, further comprising:
fourth means for varying the access speed of the disc to one fixed speed if the second means determines that there is no user input.

20. The apparatus as set forth in claim 19, further comprising:
fifth means for varying the access speed of the disc according to disc maker information of the disc if the second means determines that there is no user input.
